# EUROPÄISCHE PATENTSCHRIFT

(11) **EP 0 927 734 B1**
(45) Veröffentlichungstag und Bekanntmachung des Hinweises auf die Patenterteilung: **15.09.2004**
(21) Anmeldenummer: 98123866.0
(22) Anmeldetag: 16.12.1998
(51) Int. Cl.: C08G 77/06, C08G 77/18

(54) **Kontinuierliches Verfahren zur Herstellung von Polyorganosiloxanen**
Continuous process for the production of polyorganosiloxanes
Procédé continu pour la fabrication de polyorganosiloxanes

(30) Priorität: 02.01.1998 DE 19800023
(43) Veröffentlichungstag der Anmeldung: 07.07.1999
(73) Patentinhaber: Wacker-Chemie GmbH, 81737 München (DE)
(72) Erfinder: Hoffmann, Sabine, 01445 Radebeul (DE); Käppler, Klaus Dr., 01326 Dresden (DE)

(56) Entgegenhaltungen:
- EP-A- 0 167 924
- EP-A- 0 691 362

## Beschreibung

Die Erfindung betrifft ein kontinuierliches Verfahren zur Herstellung von Polyorganosiloxanen durch mehrstufige Hydrolyse bzw. Kondensation von Alkoxysilanen in Gegenwart von Chlorwasserstoff und/oder mindestens eine SiCl-Gruppe aufweisenden Verbindung und eines mit Wasser nicht mischbaren Lösemittels.

Polyorganosiloxane, welche auch als Siliconharze bezeichnet werden, sind siliciumorganische Verbindungen, welche aus monofunktionellen M-, difunktionellen D-, trifunktionellen T- und tetrafunktionellen Q-Einheiten netzwerkartig aufgebaut sind, wobei üblicherweise T-Einheiten das Si-O-Grundgerüst bilden. Sie enthalten weiterhin Si-C-Bindungen sowie herstellungsbedingt einen Anteil Si-OH- und Si-OR-Gruppen im Molekül. Dabei bestimmen Gehalt und Verhältnis der Si-OH- und Si-OR-Gruppen sowie der Anteil an Si-O-Bindungen die Reaktivität des Siloxanes. Polysiloxane, welche ausschließlich aus trifunktionellen Einheiten aufgebaut sind, sind sehr hart und spröde, mit Zunahme des difunktionellen Anteils erhöht sich jedoch die Elastizität.

Die Herstellung von Polyorganosiloxanen durch Hydrolyse von Chlorsilanen oder Alkoxysilanen ist bekannt. Da die Reaktionsgeschwindigkeit der Hydrolyse von Chlorsilanen größer ist als die der Alkoxysilane, sind die Produkteigenschaften meist nur schwer steuerbar, die Umsetzungen enden oft mit dem Anfall von unlöslichen bzw. unbrauchbaren Endprodukten.

Um die Reaktion beherrschbar zu gestalten, werden die Chlorsilane vollständig oder partiell alkoxyliert und dann in einem mit Wasser nicht mischbaren Lösemittel hydrolysiert. EP 691 362 beschreibt ein Verfahren, in welchem Alkoxysilane mit unterschiedlichen Alkoxyresten hydrolysiert werden.

Die Hydrolyse kann kontinuierlich und diskontinuierlich in homogener oder heterogener Phase sowie unter Verwendung von mit Wasser mischbaren oder nicht mischbaren Lösemitteln durchgeführt werden. DD 228 550 beschreibt beispielsweise ein kontinuierliches Verfahren zur Herstellung von Methylharzen, ausgehend von Methylchlorsilanen. Der Nachteil dieses Verfahrens besteht darin, daß die Hydrolyseprodukte niedermolekular sind und in Abhängikeit von der Anwendung unterschiedlich kondensiert werden müssen.

Diskontinuierliche Verfahren haben den Vorteil, daß während der Hydrolyse- bzw. Kondensationsreaktion die gewünschten Molgewichte oder Viskositäten eingestellt werden können. Nachteilig sind die schlechten Raum-Zeit-Ausbeuten.

Die Aufgabe der Erfindung bestand darin, ein kontinuierliches Verfahren zur Herstellung von Polyorganosiloxanen bereitzustellen, welches von Alkoxysilanen ausgeht und es gestattet, Endprodukte mit definierten Eigenschaften und mit enger Molgewichtsverteilung sowie mit einem geringen hochmolekularen Anteil, reproduzierbar herzustellen.

Gegenstand der Erfindung ist ein kontinuierliches Verfahren zur Herstellung von Polyorganosiloxanen, bei welchem
(a) in einer ersten Stufe
   mindestens ein Alkoxysilan der allgemeinen Formel

   RₓSi(OR¹)₄₋ₓ (I),

   wobei R unabhängig voneinander substituierte und/oder unsubstituierte, gesättigte und/oder ungesättigte Kohlenwasserstoffreste mit 1 bis 4 Kohlenstoffatomen oder Wasserstoff mit der Maßgabe darstellt, daß nur ein Wasserstoff pro Silicium gebunden ist sowie R¹ unabhängig voneinander gesättigte Kohlenwasserstoffreste mit 1 bis 4 Kohlenstoffatomen bedeutet und x Werte von 0 bis 3 annimmt, und/oder dessen Teilhydrolysat mit 0,25 bis 0,40 Mol Wasser pro hydrolysierbarer Gruppe, in Gegenwart von Chlorwasserstoff und/oder mindestens eine SiCI-Gruppe aufweisenden Verbindung sowie in Gegenwart eines mit Wasser nicht mischbaren Lösemittels in homogener Phase umgesetzt wird,
   das erhaltenen Reaktionsprodukt
(b) in einer zweiten Stufe
   mit 0,25 bis 1,50 Mol Wasser pro hydrolysierbarer Gruppe, in Gegenwart von Chlorwasserstoff und/oder mindestens eine SiCI-Gruppe aufweisenden Verbindung sowie unter Zugabe von weiteren mit Wasser nicht mischbaren Lösemittel in heterogener Phase
   umgesetzt und das erhaltene Produkt
(c) in einer dritten Stufe
   intensiv mit Wasser gewaschen und anschließend die wäßrig-alkoholische Phase abgetrennt wird.

Als Alkoxysilan der allgemeinen Formel (I) werden üblicherweise trifunktionelle Alkoxysilane, wie Methyltrialkoxysilane und/oder difunktionelle Alkoxysilane, wie Dimethyldialkoxysilane eingesetzt, wobei als Alkoxyrest Methoxy- oder Ethoxyreste bevorzugt sind. Weiterhin können Alkoxysilane, welche Q-Einheiten bilden, wie Tetraalkoxysilane, und/oder monofunktionelle Silane, wie Trialkylalkoxysilane, bei denen die Trialkylsilylgruppe beispielsweise eine Trimethyl-, Dimethylvinyl-, Dimethylethyl-, Chlormethyldimethyl- und/oder Dimethylhydrogensilyl-Gruppe ist verwendet werden. Das Verhältnis der Alkoxysilane, d. h. Menge und Funktionalität, ist abhängig von den gewünschten Endprodukten bzw. deren späterer Verwendung.

In der ersten Stufe wird durchgehend in homogener Phase gearbeitet, wobei die Siloxankonzentration bevorzugt 10 bis 25 Gew.-%, bezogen auf die homogene Phase, beträgt. Dabei beträgt das Gew.-Verhältnis Alkoxysilan zu Lösemittel von 1 zu 0,55 bis 1,7.

Der Chlorwasserstoff wird sowohl in der ersten als auch in der zweiten Stufe üblicherweise gelöst in der benötigten Wassermenge, in Form von Salzsäure zugegeben. Die Salzsäure kann gelöst in einem mit Wasser mischbaren Lösemittel, wie beispielsweise Ethanol oder Aceton, zugegeben werden. Es ist bevorzugt, die Wassermenge von 0,25 bis 0,40 Mol, insbesondere von 0,25 bis 0,33 Mol, pro hydrolysierbarer Gruppe in der ersten Stufe in Form von konzentrierter Salzsäure zuzusetzen. Die angegebenen Wassermengen beziehen sich auf die Gesamtmenge an hydrolysierbaren Gruppen, das heißt auf die Summe der in den Alkoxysilanen der allgemeinen Formel (I) enthaltenen OR¹-Gruppen und der gegebenenfalls enthaltenen SiCl-Gruppen. Anstelle von Chlorwasserstoff kann eine Verbindung, die mindestens ein SiCl-Gruppe aufweist, eingesetzt werden, welche dann bei Wasserzugabe Chlorwasserstoff freisetzt bzw. es können Salzsäure und SiCI-Gruppen aufweisende Siliciumverbindungen gemeinsam zugegeben werden. Der Gesamt-Chlorwasserstoff-Gehalt des Reaktionsgemisches nach der ersten Stufe beträgt 1 bis 5 Gew.-%, wobei es gleichgültig ist, ob der HCl-Lieferant die Salzsäure oder die SiCI-Gruppen aufweisende Verbindung ist.

In der zweiten Stufe werden weiteres organisches, mit Wasser nicht mischbares Lösemittel sowie eine weitere definierte Menge Wasser zugesetzt. Erfindungsgemäß beträgt die zugesetzte Wassermenge 0,25 bis 1,50 Mol, wobei diese Menge auf die hydrolysierbaren Gruppen bezogen wird. Beispielsweise können bis zu 0,50 Mol Wasser pro hydrolysierbarer Gruppe eingesetzt werden, wenn ein bei Raumtemperatur festes Siliconharz hergestellt werden soll und mehr als 0,50 Mol pro hydrolysierbarer Gruppe sind bevorzugt für die Synthese von bei Raumtemperatur flüssigen Harzen. Es wird in heterogener Phase gearbeitet, die Siloxankonzentration beträgt dabei bevorzugt 15 bis 25 Gew.-%, bezogen auf die organische Lösemittelphase. Die Wassermenge kann hierbei analog zur ersten Stufe in Form von Salzsäure, beispielsweise 10 bis 36 Gew.-% Chlorwasserstoff enthaltend, zugegeben werden. Ebenso wie in der ersten Stufe ist es jedoch auch möglich, pures Wasser zu verwenden und die benötigte Cl-Konzentration mittels SiCI-Gruppen aufweisender Siliciumverbindungen zu erreichen bzw. es können Salzsäure und Verbindung der allgemeinen Formel (II) zudosiert werden. Die Konzentration an Chlorwasserstoff in der wäßrigen Phase nach der zweiten Stufe beträgt üblicherweise 5 bis 20 Gew.-%.

In beiden Stufen wird als organisches, mit Wasser nicht mischbares Lösemittel Toluol und/oder Xylol eingesetzt. Die Umsetzung in der ersten und in der zweiten Stufe erfolgt bevorzugt bei Temperaturen zwischen 45 und 60°C bis zu Rückflußtemperaturen, das Arbeiten unter Druck ist ebenfalls möglich.

Als mindestens eine SiCl-Gruppe aufweisende Verbindung kann in der ersten und/oder in der zweiten Stufe mindestens eine Verbindung der allgemeinen Formel

R² ₓSiCl₄₋ₓ (II)

zugesetzt werden,
wobei R² unabhängig voneinander ein substituierter und/oder unsubstituierter, gesättigter und/oder ungesättigter Kohlenwasserstoffrest mit 1 bis 20 Kohlenstoffatomen oder Wasserstoff mit der Maßgabe ist, daß nur ein Wasserstoff pro Silicium gebunden ist, bedeutet und x Werte zwischen 0 und 3 annimmt. Bevorzugt werden insgesamt 0,5 bis 20 Gew-%, bezogen auf das eingesetzte Alkoxysilan in der ersten und/oder zweiten Stufe zugesetzt.

Durch die Verwendung von SiCl-Gruppen aufweisenden Verbindungen ist es möglich, die Zugabemenge des für die Hydrolyse bzw. Kondensation benötigten sauren Katalysators (Salzsäure) zu minimieren und durch SiCI-Gruppen zu ersetzen, welche in Gegenwart von Wasser in-situ Salzsäure bilden. Da jedoch die Konzentration an SiCl-Gruppen im Ausgangsgemisch im Vergleich zu den eingesetzten Mengen an Alkoxysilanen gering ist, und diese demnach homogen verteilt vorliegen, ist es möglich, die Reaktion kontrolliert ablaufen zu lassen.

Eine weiterer Vorteil, welcher durch den Zusatz von Verbindungen der allgemeinen Formel (II) erreicht wird, ist die definierte Zugabe verschiedener Funktionalitäten, wiederum in Abhängigkeit vom gewünschten Endprodukt bzw. dessen späterer Verwendung. Weiterhin ist es möglich, im Endprodukt gewünschte Einheiten, welche sonst nur über einen zusätzlichen Verfahrensschritt, beispielsweise einer Äquilibrierung, einbaubar waren, schon durch eine gezielte Auswahl der SiCI-Gruppen aufweisenden Verbindungen in die Reaktionsmischung einzubringen. Übliche Reste R² sind Methyl-, Vinyl- oder Ethylgruppen, beispielsweise werden Trialkylchlorsilane, Siliciumtetrachlorid und/oder Methylvinyldichlorsilan verwendet, wobei die Alkylgruppe längerkettig und/oder substituiert sein kann. Beispiele für die funktionelle Gruppe R² sind auch: Methyl-, Ethyl-, Vinyl-, n-Propyl-, i-Butyl-, n-Octan-, Hexadodecyl-, Cyclohexyl-, Cylopentyl-, 3-Aminopropyl-, 3-Methacryloxypropyl-, 3-Glycidoxypropyl-, 3-Mercaptopropyl- oder Tridecafluoroctylreste.

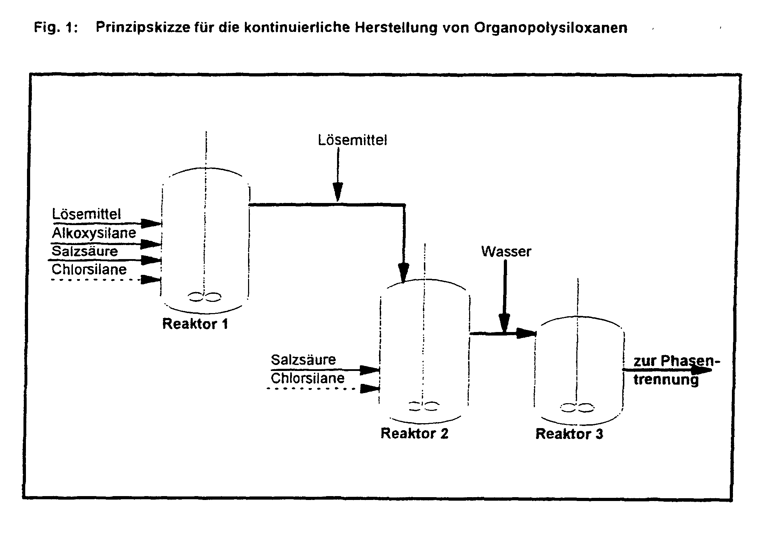

Beispielhaft soll eine vorteilhafte Ausführungsform des erfindungsgemäßen Verfahrens im folgenden dargestellt werden (s. Figur 1):

Die erste Stufe wird in einem beheizbaren Reaktor 1 durchgeführt, der mit einem intensiv vermischenden Mischorgan, wie beispielsweise einem Rührer sehr hoher Geschwindigkeit oder einer Kreiselpumpe, einem Rückflußkühler und Temperaturmessung ausgestattet ist. In diesen Reaktor 1 werden organisches, mit Wasser nicht mischbares Lösemittel, Alkoxysilane, Salzsäure und gegebenfalls Chlorsilane über Dosiereinrichtungen gegeben. Sinnvoll ist es, alle Reaktanten in den Sumpf des Kessels oder, falls eine Kreiselpumpe verwendet wird, in den Umpumpstrom zu dosieren. Günstig ist ebenfalls, wenn die Alkoxysilane im Gemisch mit dem verwendeten Lösemittel dosiert werden. Die Chlorsilane werden entweder gesondert dosiert oder als Mischung mit den Alkoxysilanen oder dem Lösemittel zugegeben.

Die Salzsäure sollte 36 Gew.-% Chlorwasserstoff enthalten, als Lösemittel werden bevorzugt Toluol und/oder Xylol eingesetzt. Es ist möglich, die Salzsäure vor der Zugabe mit einem mit Wasser mischbaren Lösemittel, wie Ethanol oder Aceton, zu mischen. Bei Verwendung von Ethanol kann beispielsweise mit der 1- bis 2-fachen Gewichtsmenge an Lösemittel gemischt werden.
Es werden 0,25 bis 0,40 Mol, bevorzugt bis 0,33 Mol Wasser, bezogen auf die hydrolysierbaren Gruppen in Form von konzentrierter Salzsäure zugesetzt.
In dieser ersten Stufe erfolgt eine partielle Hydrolyse. Die Reaktion erfolgt in homogener Phase üblicherweise bei Temperaturen zwischen 45 und 60 °C bis zu Rückflußtemperaturen. Die Siloxankonzentration des homogenen Reaktionsgemisches beträgt bevorzugt 10 bis 25 Gew.-%. Die mittlere Verweilzeit in der ersten Stufe beträgt 15 bis 90 Minuten, bevorzugt maximal 50 min. Anschließend gelangt das erhaltene Reaktionsprodukt in einem Reaktor 2, welcher wie der Reaktor 1 ausgestattet ist.
Das Reaktionsprodukt aus der ersten Stufe wird mit einer weiteren Lösemittelmenge versetzt, dies kann entweder vor dem Reaktor 2 und/oder im Reaktor 2 erfolgen. In den Reaktor 2 werden wiederum Salzsäure, ggf. gelöst in mit Wasser mischbaren Lösemitteln, sowie ggf. Chlorsilane, vorzugsweise wieder in den Sumpf oder in den Umpumpstrom dosiert. Die Reaktionstemperatur beträgt 45 bis 60 °C bis zur Rückflußtemperatur, die mittlere Verweilzeit beträgt 15 bis 60 Minuten, bevorzugt maximal 40 Minuten. Es werden 0,25 bis 1,50 mol Wasser, bezogen auf die hydrolysierbaren Gruppen, zugesetzt, vorzugsweise in Form von wäßriger Salzsäure mit 10 bis 36 Gew.-% Chlorwasserstoff. Die zweite Stufe verläuft in heterogener Phase, d. h. das Reaktionsgemisch besteht aus einer lösemittelhaltigen, vorzugsweise 15 bis 25 Gew.-% Siloxan enthaltenden Phase und einer wäßrig-alkoholischen Salzsäurephase.

Das Produkt, welches die zweite Stufe verläßt, wird in einer dritten Stufe (Reaktor 3) intensiv mit Wasser gewaschen. Nach der Wäsche erfolgt die Trennung der lösemittelhaltigen Siloxanphase von der wäßrig-alkoholischen Phase.

Mit der Siloxanphase kann nun auf unterschiedlichste Weise weiter verfahren werden. Man kann durch destillatives Entfernen des Lösemittels, beispielsweise in einem Dünnschichtverdampfer, die Konzentration erhöhen und so Polyorganosiloxan-Lösungen herstellen, oder das Lösemittel ganz entfernen und so lösemittelfreie Polyorganosiloxane erhalten. Das lösemittelfreie Polyorganosiloxan kann dabei in fester Form, z. B. als Schuppen oder Pastillen, oder als Flüssigharz vorliegen, wenn beispielsweise D-Einheiten enthalten und/oder längerkettige Alkylgruppen am Silicium gebunden sind.

Mit dem erfindungsgemäßen kontinuierlichen Verfahren gelingt es, ausgehend von Alkoxysilanen, Polyorganosiloxane mit definierten Eigenschaften und mit enger Molgewichtsverteilung reproduzierbar herzustellen. So sind beispielsweise problemlos Produkte mit einem hohen SiOEt-Gehalt für die Herstellung von lagerstabilen, niedrigviskosen Harzlösungen oder mit niedrigem SiOEt-Gehalt und hohem SiOH-Gehalt für die Herstellung von bei Raumtemperatur festen Harzen mit Schmelzpunkten > 45 °C synthetisierbar. Es werden Produkte erhalten, die nur einen geringen hochmolekularen Anteil aufweisen und damit niedrige Viskositäten und sehr gute Lagerstabilitäten gewährleisten.

Weiterhin ist es durch gezielte Auswahl der SiCI-Gruppen aufweisenden Verbindungen in der ersten und/oder zweiten Stufe möglich, Gruppen in das Harz einzubauen, welche sonst nur über einen zusätzlichen Verfahrensschritt, beispielsweise einer Äquilibrierung, einbaubar sind und somit eine Vielzahl von Endproduktqualitäten einzustellen.

Die durch das erfindungsgemäße kontinuierliche Verfahren hergestellten Produkte können u. a. zur Herstellung von Glimmerisolierstoffen und zur Hydrophobierung von Elektromagnesia in der Elektroindustrie und zur Herstellung von Emulsionen, beispielsweise im Bautenschutz, verwendet werden. Die bei Raumtemperatur flüssigen Polyorganosiloxane sind hervorragend zur Herstellung von Emulsionen geeignet.

### Ausführungsbeispiele

### Beispiele 1 bis 13

In der nachfolgenden Tabelle sind 13 Beispiele zur Herstellung von Methylsiliconharz durch mehrstufige Hydrolyse/Kondensation zusammengestellt.

Die erste Stufe wurde in homogener Phase durchgeführt. Als Kriterium für den Verlauf der Hydrolyse- bzw. Kondensationsreaktion in der ersten und zweiten Stufe wurden die Kennwerte der Konzentrate herangezogen (SiOH- und SiOEt- Gehalt sowie der Anteil an Hochmolekularen). Als Konzentrate wurden die 65 bis 75 Gew.-% Siloxan aufweisenden Harzlösungen bezeichnet, die nach teilweiser destillativer Abtrennung des Lösemittels von den nach der dritten Stufe erhaltenen Produkten anfielen.

Aus den Beispielen ist ersichtlich, daß mit dem erfindungsgemäßen Verfahren eine Vielzahl von Variationsmöglichkeiten zur Einstellung gezielter Endproduktqualitäten möglich sind.
So ergeben die in den Beispielen 8 und 9 angeführten Produkte Festharze mit Schmelzpunkten von 46 bzw. 48 °C. Zusätze von Q-Einheiten (s. Beispiele 10 und 11) dienen der Erhöhung des Schmelzpunktes.

Der hochmolekulare Anteil wurde mittels Gelpermeationschromatografie (GPC) ermittelt. Erfaßt wurden die Bestandteile mit mehr als 6.500 g/mol (Polystyrolstandard).

Die Ergebnisse sind in Tabelle 1 zusammengestellt.

### Vergleichsbeispiel (Vgl*)

Die Hydrolyse/Kondensation wurde einstufig in heterogener Phase im Reaktor 1 durchgeführt und anschließend das Reaktionsgemisch gewaschen und in die organische Siloxanphase und wäßrig-alkoholische Phase getrennt.

Es ist eindeutig, daß es mit der einstufigen Hydrolyse/Kondensation nicht gelingt, Produkte mit enger Molekulargewichtsverteilung und einem niedrigen hochmolekularen Anteil zu erhalten.

Das Ergebnis ist ebenfalls in Tabelle 1 enthalten.

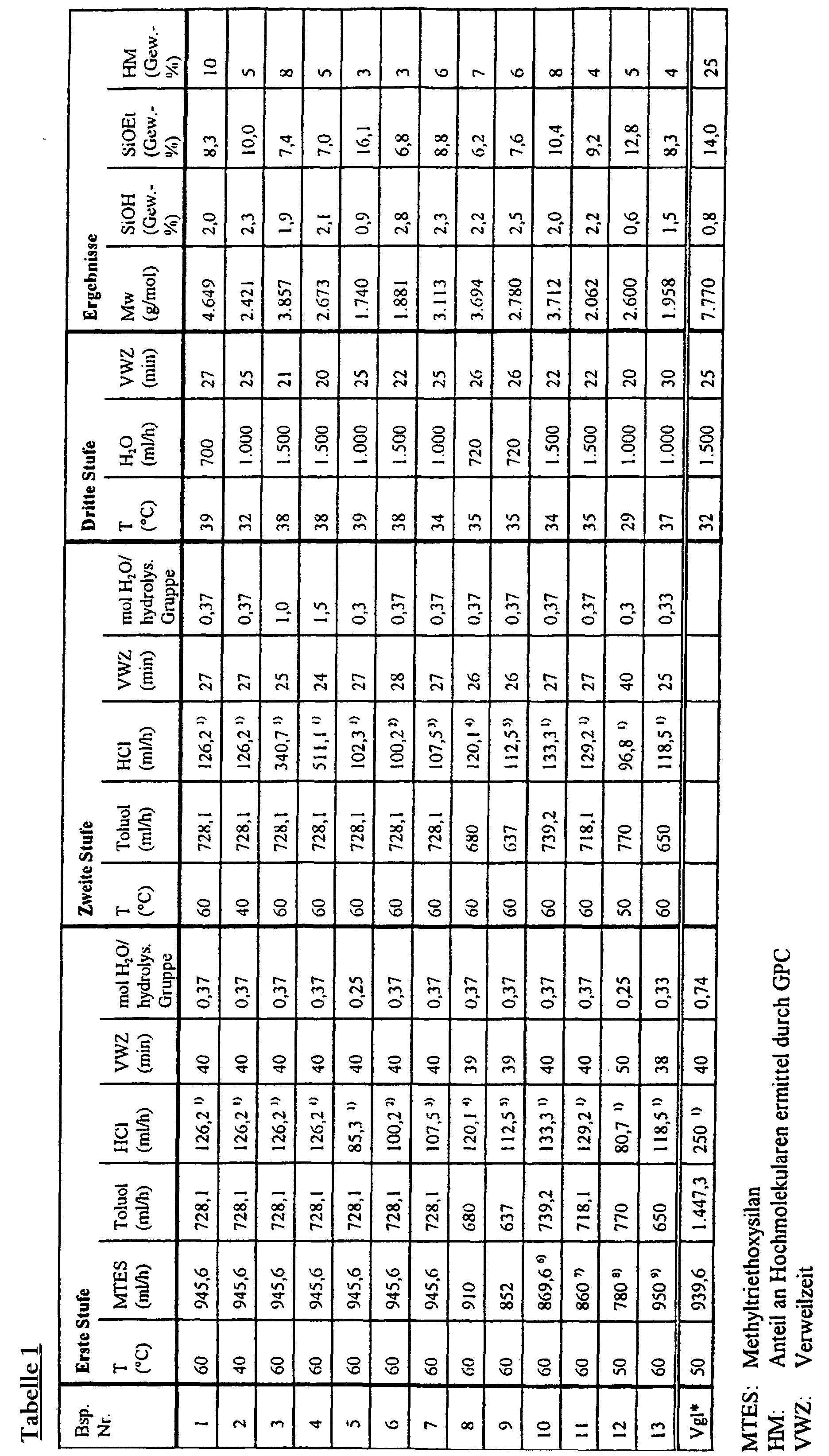

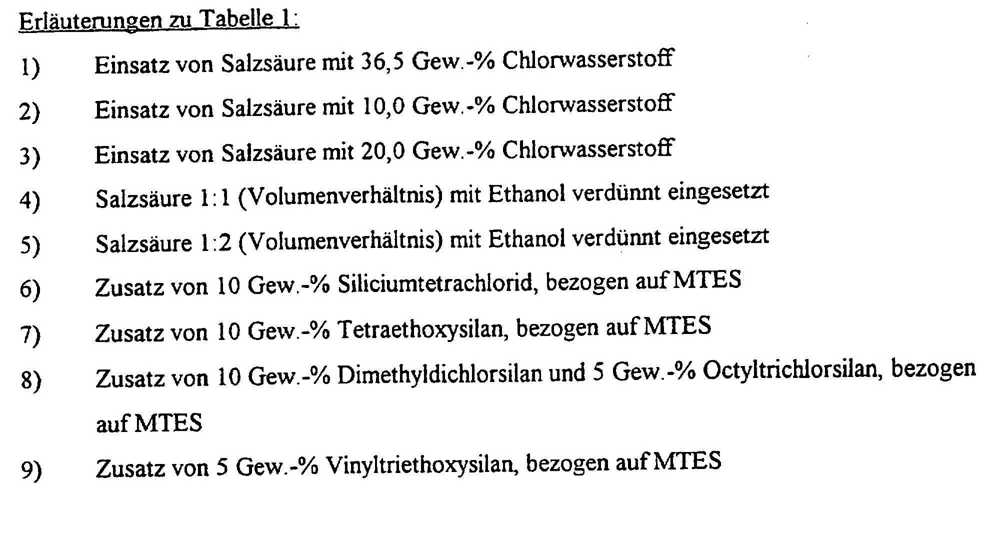

## Patentansprüche

1. Kontinuierliches Verfahren zur Herstellung von Polyorganosiloxanen,
**dadurch gekennzeichnet, daß**
(a) in einer ersten Stufe
mindestens ein Alkoxysilan der allgemeinen Formel
RₓSi(OR¹)₄₋ₓ (I),
wobei R unabhängig voneinander substituierte und/oder unsubstituierte, gesättigte und/oder ungesättigte Kohlenwasserstoffreste mit 1 bis 4 Kohlenstoffatomen oder Wasserstoff mit der Maßgabe darstellt, daß nur ein Wasserstoff pro Silicium gebunden ist sowie R¹ unabhängig voneinander gesättigte Kohlenwasserstoffreste mit 1 bis 4 Kohlenstoffatomen bedeutet und x Werte von 0 bis 3 annimmt, und/oder dessen Teilhydrolysat, mit 0,25 bis 0,40 Mol Wasser pro hydrolysierbarer Gruppe, in Gegenwart von Chlorwasserstoff und/oder mindestens eine SiCI-Gruppe aufweisenden Verbindung sowie in Gegenwart eines mit Wasser nicht mischbaren Lösemittels in homogener Phase umgesetzt wird,
das erhaltenen Reaktionsprodukt
(b) in einer zweiten Stufe
mit 0,25 bis 1,50 Mol Wasser pro hydrolysierbarer Gruppe, in Gegenwart von Chlorwasserstoff und/oder mindestens eine SiCl-Gruppe aufweisenden Verbindung sowie unter Zugabe von weiteren mit Wasser nicht mischbaren Lösemittel in heterogener Phase
umgesetzt und das erhaltene Produkt
(c) in einer dritten Stufe
intensiv mit Wasser gewaschen und anschließend die wäßrig-alkoholische Phase abgetrennt wird.

2. Verfahren nach Anspruch 1, **dadurch gekennzeichnet, daß** der Chlorwasserstoff zusammen mit der benötigten Wassermenge in Form von Salzsäure zugegeben wird.

3. Verfahren nach Anspruch 2, **dadurch gekennzeichnet, daß** die Salzsäure gelöst in einem mit Wasser mischbaren Lösemittel eingesetzt wird.

4. Verfahren nach Anspruch 1, dadurch gekennzeichet, daß die Wassermenge in der ersten Stufe in Form von konzentrierter Salzsäure zugesetzt wird.

5. Verfahren nach Anspruch 1, **dadurch gekennzeichnet, daß** der Chlorwasserstoff-Gehalt des Reaktionsgemisches nach der ersten Stufe 1 bis 5 Gew.-% beträgt.

6. Verfahren nach Anspruch 1, **dadurch gekennzeichnet, daß** die in der ersten und/oder in der zweiten Stufe zugesetzte, als mindestens eine SiCl-Gruppe aufweisende Verbindung der allgemeinen Formel
R² ₓSiCl₄₋ₓ (II),
entspricht,
wobei R² unabhängig voneinander ein substituierter und/oder unsubstituierter, gesättigter und/oder ungesättigter Kohlenwasserstoffrest mit 1 bis 20 Kohlenstoffatomen oder Wasserstoff mit der Maßgabe ist, daß nur ein Wasserstoff pro Silicium gebunden ist, bedeutet und x Werte zwischen 0 und 3 annimmt.

7. Verfahren nach Anspruch 6, **dadurch gekennzeichnet, daß** insgesamt 0,5 bis 20 Gew.-% der Verbindung der allgemeinen Formel (II), bezogen auf das eingesetzte Alkoxysilan der allgemeinen Formel (I), dem Reaktionsgemisch in der ersten und/oder zweiten Stufe zugesetzt werden.

8. Verfahren nach Anspruch 1, **dadurch gekennzeichnet, daß** die Siloxankonzentration in der ersten Stufe 10 bis 25 Gew.-%, bezogen auf die homogene Phase, beträgt.

9. Verfahren nach Anspruch 1, **dadurch gekennzeichnet, daß** die Siloxankonzentration in der zweiten Stufe 15 bis 25 Gew.-%, bezogen auf die organische Lösemittelphase, beträgt.

10. Verfahren nach Anspruch 1, **dadurch gekennzeichnet, daß** als mit Wasser nicht mischbares Lösemittel Toluol und/oder Xylol eingesetzt wird.

## Claims

1. Continuous process for the production of polyorganosiloxanes, **characterized in that**
(a) in a first stage,
at least one alkoxysilane of the general formula
RₓSi(OR¹)₄₋ₓ (I),
in which R, independently of one another, represent substituted and/or unsubstituted, saturated and/or unsaturated hydrocarbon radicals having 1 to 4 carbon atoms or hydrogen, with the proviso that there is only one bound hydrogen per silicon, and R¹, independently of one another, denotes saturated hydrocarbon radicals having 1 to 4 carbon atoms and x assumes values from 0 to 3, and/or the partial hydrolysis product thereof is reacted with from 0.25 to 0.40 mol of water per hydrolysable group, in the presence of hydrogen chloride and/or a compound having at least one SiCl group and in the presence of a water-. immiscible solvent in the homogeneous phase,
the reaction product obtained is reacted
(b) in a second stage
with from 0.25 to 1.50 mol of water per hydrolysable group, in the presence of hydrogen chloride and/or a compound having at least one SiCl group and with addition of further water-immiscible solvent in the heterogeneous phase and
(c) in a third stage
the product obtained is washed thoroughly with water and the aqueous alcoholic phase is then separated off.

2. Process according to Claim 1, **characterized in that** the hydrogen chloride is added together with the required amount of water in the form of hydrochloric acid.

3. Process according to Claim 2, **characterized in that** the hydrochloric acid is used in the form of a solution in a water-miscible solvent.

4. Process according to Claim 1, **characterized in that** the amount of water in the first stage is added in the form of concentrated hydrochloric acid.

5. Process according to Claim 1, **characterized in that** the hydrogen chloride content of the reaction mixture after the first stage is from 1 to 5% by weight.

6. Process according to Claim 1, **characterized in that** the a compound having at least one SiCl group and added in the first and/or in the second stage corresponds to the general formula
R² ₓSiCl₄₋ₓ (II)
in which R², independently of one another, denote a substituted and/or unsubstituted, saturated and/or unsaturated hydrocarbon radical having 1 to 20 carbon atoms or hydrogen, with the proviso that there is only one bound hydrogen per silicon, and x assumes values between 0 and 3.

7. Process according to Claim 6, **characterized in that** altogether from 0.5 to 20% by weight of the compound of the general formula (II), based on the alkoxysilane of the general formula (I) used, are added to the reaction mixture in the first and/or second stage.

8. Process according to Claim 1, **characterized in that** the siloxane concentration in the first stage is from 10 to 25% by weight, based on the homogeneous phase.

9. Process according to Claim 1, **characterized in that** the siloxane concentration in the second stage is from 15 to 25% by weight, based on the organic solvent phase.

10. Process according to Claim 1, **characterized in that** toluene and/or xylene is used as the water-immiscible solvent.

## Revendications

1. Procédé de fabrication en continu de polyorganosiloxanes, **caractérisé en ce que**
(a) dans une première étape, on fait réagir en phase homogène au moins un alcoxysilane de formule générale
RₓSi(OR¹)₄₋ₓ (I),
dans laquelle les R représentent indépendamment les uns des autres des radicaux hydrocarbure substitués et/ou non substitués, saturés et/ou non saturés qui comptent de 1 à 4 atomes de carbone, ou l'hydrogène, avec la condition que seul un hydrogène est lié à chaque atome de silicium, et les R¹ représentent indépendamment les uns des autres des radicaux hydrocarbure saturés qui comptent de 1 à 4 atomes de carbone, x pouvant prendre des valeurs comprises entre 0 et 3, et/ou leurs hydrolysats partiels, avec de 0,25 à 0,40 mole d'eau par groupe hydrolysable en présence de chlorure d'hydrogène et/ou d'un composé qui présente au moins un groupe SiCl ainsi qu'en présence d'un solvant non miscible avec l'eau,
(b) dans une deuxième étape, on fait réagir en phase hétérogène le produit de réaction obtenu avec de 0,25 à 1,50 moles d'eau par groupe hydrolysable en présence de chlorure d'hydrogène et/ou d'un composé qui présente au moins un groupe SiCl ainsi qu'avec addition d'autres solvants non miscibles avec l'eau, et
(c) dans une troisième étape, le produit obtenu est lavé de manière intense avec de l'eau et la phase eau-alcool est ensuite séparée.

2. Procédé selon la revendication 1, **caractérisé en ce que** le chlorure d'hydrogène est ajouté sous la forme d'acide chlorhydrique en même temps que la quantité d'eau nécessaire.

3. Procédé selon la revendication 2, **caractérisé en ce que** l'acide chlorhydrique est utilisé en solution dans un solvant miscible avec l'eau.

4. Procédé selon la revendication 1, **caractérisé en ce que** la quantité d'eau est ajoutée dans la première étape sous la forme d'acide chlorhydrique concentré.

5. Procédé selon la revendication 1, **caractérisé en ce que** la teneur en chlorure d'hydrogène du mélange de réaction après la première étape est comprise entre 1 et 5% en poids.

6. Procédé selon la revendication 1, **caractérisé en ce que** le composé ajouté dans la première et/ou dans la deuxième étape et qui présente au moins un groupe SiCl correspond à la formule générale (II)
R² ₓSiCl₄₋ₓ (II)
dans laquelle les R² représentent indépendamment les uns des autres un radical hydrocarbure substitué et/ou non substitué, saturé et/ou insaturé qui compte de 1 à 20 atomes de carbone, ou l'hydrogène, avec la condition que seul un hydrogène est lié à chaque silicium, x prenant des valeurs comprises entre 0 et 3.

7. Procédé selon la revendication 6, **caractérisé en ce que** dans la première et/ou la deuxième étape, on ajoute en tout au mélange de réaction de 0,5 à 20% en poids du composé de formule générale (II) par rapport à l'alcoxysilane de formule générale (I) utilisé.

8. Procédé selon la revendication 1, **caractérisé en ce que** dans la première étape, la concentration en siloxane est comprise entre 10 et 25% en poids par rapport à la phase homogène.

9. Procédé selon la revendication 1, **caractérisé en ce que** dans la deuxième étape, la concentration en siloxane est comprise entre 15 et 25% en poids par rapport à la phase solvant organique.

10. Procédé selon la revendication 1, **caractérisé en ce que** l'on utilise comme solvant non miscible avec l'eau le toluène et/ou le xylène.
